# FASCICULE DE BREVET EUROPEEN

(11) **EP 0 524 039 B1**
(45) Date de publication et mention de la délivrance du brevet: **03.01.1996**
(21) Numéro de dépôt: 92401758.5
(22) Date de dépôt: 23.06.1992
(51) Int. Cl.: B01D 17/00

(54) **Procédé et dispositif de traitement des eaux**
Verfahren und Vorrichtung zur Wasserbehandlung
Process and apparatus for water treatment

(30) Priorité: 19.07.1991 FR 9109189
(43) Date de publication de la demande: 20.01.1993
(73) Titulaire: DEGREMONT, F-92500 Rueil-Malmaison (FR)
(72) Inventeur: Vion, Patrick, F-78800 Houilles (FR)
(74) Mandataire: Armengaud Ainé, Alain

(56) Documents cités:
- EP-A- 0 290 030
- FR-A- 2 448 939
- US-A- 2 217 143
- US-A- 3 707 464
- CHEMICAL ENGINEERING vol. 82, no. 21, 6 Octobre 1975, L. D. LASH ET AL.: 'PRIMARY-WASTE-TREATMENT METHODS'

## Description

La présente invention concerne des perfectionnements apportés au traitement des eaux et elle vise plus particulièrement un procédé et des dispositifs de mise en oeuvre d'un tel procédé permettant d'effectuer à la fois le dessablage, le dégraissage, la coagulation, la floculation et la décantation des eaux.

On sait que dans les techniques actuelles de traitement des eaux les fonctions dessablage et dégraissage sont effectuées dans des appareils différents et la fonction de clarification comprenant les trois étapes successives, coagulation, floculation et décantation est effectuée dans un ou plusieurs appareils situés en aval des précédents. Cependant, afin de gagner en investissement et en compacité, on a conçu des installations qui regroupent en un seul ouvrage les fonctions dessablage et dégraissage. Malheureusement, ces deux fonctions n'exigent pas les mêmes conditions de mise en oeuvre. En effet :
- le dessablage nécessite une grande dépense d'énergie pour réaliser le désenrobage du sable (c'est-à-dire l'opération qui consiste à en séparer les matières organiques) avant sa mise en décharge et une faible surface de décantation assurant une vitesse de décantation telle que les matières organiques ne décantent pas avec le sable ; - le dégraissage demande des zones calmes de grandes surfaces de séparation avec éventuellement la présence de générateurs de fines bulles d'air (dissipant dans le milieu une faible énergie) pour accélérer le processus.

Il résulte de ces exigences contradictoires que les appareils combinés actuellement réalisés, qui ne séparent pas les différentes fonctions, présentent toujours des performances médiocres.

Les deux pré-traitements mentionnés ci-dessus sont généralement suivis d'un traitement physico-chimique (coagulation et floculation) et d'une décantation, ou d'une simple décantation, dite décantation primaire, en tête des traitements biologiques.

La présente invention se propose donc de réduire la taille des installations tout en optimisant les deux fonctions de dessablage et de dégraissage.

Le principe original à la base du procédé objet de la présente invention consiste :
- d'une part à décomposer l'une au moins des opérations de dessablage et de dégraissage en étapes élémentaires qui permettent d'optimiser ces deux fonctions ;
- d'autre part, à associer l'une au moins de ces deux étapes aux étapes élémentaires qui sont réalisées lors des traitements physico-chimiques, et de la décantation, cette association étant rendue possible en raison de la compatibilité entre les grandeurs caractéristiques des étapes des différentes fonctions (énergie, temps de séjour, vitesse apparente et sens des flux).

Les fonctions dessablage et dégraissage peuvent être décomposées en étapes élémentaires comme suit :
- pour le dessablage :
   - une phase de désenrobage durant laquelle on doit récupérer les sables de forte granulométrie débarassés des matières organiques (permettant un rejet éventuel du sable en décharge), cette phase nécessitant une forte énergie (de 15 à 50 W/m3) et elle est généralement effectuée avec des grosses bulles d'air dans un petit volume avec un temps de séjour de l'ordre de 3 à 5 minutes.
   - une phase de séparation des sables les plus fins (présentant généralement une granulométrie inférieure à 250 µm).
- pour le dégraissage :
   - une phase au cours de laquelle s'effectue la coalescence des graisses, cette étape étant réalisée avec un apport d'énergie, éventuellement améliorée par l'adjonction de bulles d'air assez fines.
   - une seconde phase de coalescense des graisses à basse énergie mettant éventuellement en oeuvre une injection de très fines bulles d'air (présentant un diamètre inférieur à 1 mm) qui permet d'améliorer la séparation gravitaire.
   - une phase de séparation devant s'effectuer dans une zone calme et assez grande pour que le débit du flux ramené au m2 de surface de séparation soit compris entre 5 m3/h/m2 et 20 m3/h/m2. Cette séparation est favorisée par une alimentation à flux vertical et à basse vitesse.

   Par ailleurs, on sait que les étapes élémentaires qui sont réalisées dans un traitement physico-chimique des eaux sont les suivantes :
- la coagulation :
   au cours de cette étape, on injecte un coagulant tel que notamment un sel de fer, d'aluminium, en amont d'un réacteur dans lequel le temps de séjour est compris entre une et quatre minutes et où est dissipée une énergie comprise entre 20 et 60 W/m3 ;
- la floculation premier étage :
   lors de cette étape un floculant, constitué d'un polymère est dissipé dans un réacteur sous agitation (5 à 20 W/m3). Le temps de séjour dans ce réacteur est compris entre 5 mn et 30 mn ;
- la floculation deuxième étage :
   cette étape consiste en une floculation à basse énergie avec un temps de séjour plus faible. Avantageusement, la configuration de l'appareillage permettant de réaliser cette fonction consiste en un réacteur piston à flux ascentionnel.

Ce traitement physico-chimique est suivi de la décantation comportant:
- l'alimention de la zone de décantation, effectuée à flux descendant et à faible vitesse. Cette alimentation est intégrée au décanteur dans lequel s'effectue l'étape suivante de l'étage consécutif à la décantation proprement dite, au cours de laquelle on assure l'élimination des matières floculées et des graisses piégées dans le floc.

En conséquence, cette invention concerne en premier lieu, un procédé de traitement des eaux qui consiste à effectuer dans un même ouvrage les opérations de dessablage, de dégraissage, de coagulation, de floculation et de décantation caractérisé en ce qu'il consiste
d'une part,
- à décomposer le dessablage en une phase de désenrobage des sables et une phase de séparation et d'élimination des sables fins présentant une granulométrie inférieure à 250 µm;
- à décomposer le dégraissage en une première phase de coalescence des graisses par action mécanique avec ou sans injection d'air, une seconde phase de coalescence des graisses par injection d'air et une phase de séparation des graisses;
et d'autre part, à effectuer l'une au moins des étapes suivantes :
- une étape réalisant simultanément la phase de désenrobage des sables et celle de coagulation de l'eau brute ;
- une étape réalisant simultanément la phase de séparation et d'élimination des sables fins, la première phase de coalescence des graisses et une phase de floculation par action mécanique ;
- une étape réalisant simultanément la deuxième phase de coalescence des graisses et la phase de floculation durant laquelle s'effectue la croissance des flocs et,
- une étape réalisant simultanément la phase de séparation des graisses et l'alimentation de la décantation.

L'invention vise également, en second lieu un dispositif pour la mise en oeuvre du procédé tel que spécifié ci-dessus, ce dispositif étant caractérisé en ce qu'il comporte dans le même ouvrage et successivement :
- un premier réacteur de désenrobage des sables et de coagulation de l'eau brute comportant des moyens d'agitation mécanique ou d'insuflation d'air et des moyens d'évacuation du sable à sa partie inférieure;
- un second réacteur de séparation et d'élimination des sables fins de granulométrie inférieure à 250 µm, de coalescence des graisses et de floculation par action mécanique qui comprend des moyens d'agitation mécaniques avec ou sans injection de bulles d'air, des moyens d'introduction d'un agent floculant et des moyens d'évacuation des sables fins en partie inférieure ;
- un troisième réacteur de croissance du floc et de début de séparation des grasses qui comprend des moyens pour injecter des bulles d'air;
- une zone d'alimentation d'un décanteur muni d'un système de reprise ou de transfert des flottants et des moyens, à la base du décanteur , pour assurer l'évacuation des boues décantées.

On décrira maintenant en détail l'invention en se référant aux dessins annexés qui en illustrent divers exemples de mise en oeuvre, étant entendu qu'il ne s'agit là que d'exemples dépourvus de tout caractère limitatif.

Sur les dessins :
La figure 1 représente d'une façon schématique, en coupe axiale verticale, une installation permettant la mise en oeuvre du procédé objet de l'invention ;
La figure 2 illustre une variante de l'installation selon l'invention mettant en oeuvre un décanteur lamellaire.
- les figures 3 et 4 sont des coupes respectivement selon 3-3 et 4-4 de la figure 2 ;
- la figure 5 est une vue en coupe selon 5-5 de la figure 2 ;
- la figure 6 illustre une autre variante d'un appareil pour la mise en oeuvre de l'invention comportant également un décanteur lamellaire, cette figure étant une vue en plan et,
- la figure 7 est une vue selon 7-7 de la figure 6.

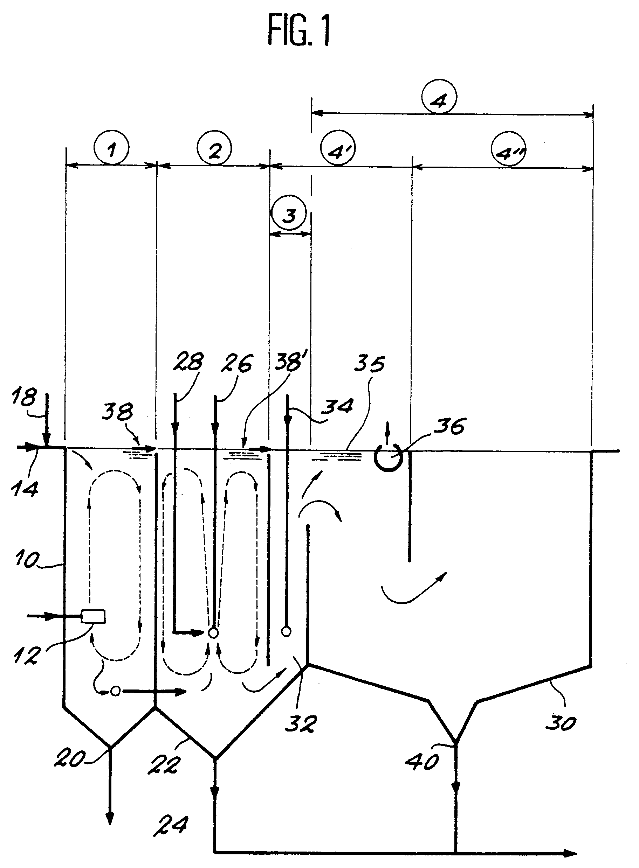

On se réfère en premier lieu à la figure 1 qui représente d'une façon générale un dispositif pour la mise en oeuvre du procédé selon la présente invention. A la partie supérieure de cette figure, on a schématisé les différentes étapes du procédé selon l'invention, telles que précisées ci-dessus, ces étapes correspondant ainsi qu'on le verra ci-après à une partie du dispositif représenté sur cette figure. Ces étapes sont donc les suivantes ainsi qu'on l'a déjà précisé :
- étape 1 : coagulation durant laquelle on injecte un coagulant et simultanément on assure le désenrobage du sable de l'eau à traiter. Le dispositif comporte dans ce but un réacteur 10 à forte énergie spécifique comportant un système 12 d'agitation mécanique ou d'injection d'air au sein de la masse brute à traiter qui est introduite en 14 dans le réacteur, ce système 12 permettant d'assurer le mélange du coagulant 18 et par conséquent la coagulation. Les sables les plus gros, sans matière organique sont évacués par la partie inférieure 20 du réacteur 10.
- étape 2: on y réalise l'élimination des sables les plus fins, la coalescence des graisses et la floculation. Cette étape est effectuée dans un reacteur 22 soumis à agitation, avec temps de séjour important, de manière à permettre le dépôt et l'évacuation à la base 24 du réacteur 22 des sables plus fins, avec éventuellement des matières organiques qui peuvent être traitées ultérieurement avec les bornes extraites du décanteur 30 décrit ci-après. Simultanément on favorise dans ce réacteur 22 la coalescence des graisses avec éventuellement un apport de bulles d'air par un moyen approprié 26 et la floculation par adjonction, de manière connue, d'un agent floculant 28, par exemple un polymère, et par dissipation uniforme de l'énergie dans tout le réacteur par agitation mécanique ou par injection d'air.
- étape 3: on y réalise la croissance du floc et on y commence la séparation des graisses. Dans cet exemple de réalisation, on met en oeuvre un réacteur piston 32, à flux ascentionnel et à basse vitesse. Afin d'accélérer la vitesse de remontée des graisses on peut injecter de fines bulles d'air 34. Ainsi qu'on l'a déjà précisé dans le préambule de la description, la taille de ces bulles d'air doit être la plus faible possible afin de ne pas détériorer les flocs et de favoriser la fixation des graisses grâce à des phénomènes de tension superficielle.
- étape 4: on y réalise successivement l'alimentation 35 à flux descendant de la zone de décantation et la décantation (étape 4 ''). On y met en oeuvre un décanteur 30. La surface correspondant à la zone 4' dégagée par cette zone d'alimentation 35 et par la zone précédente comportant le réacteur piston 32 permet une séparation des graisses. A sa sortie, cette zone d'alimentation 35 comporte un système mécanique 36 de reprise des flottants. Etant donné que des graisses peuvent apparaître au dessus des réacteurs 20 et 22, on prévoit un système de reprise ou de transfert des flottants 38 - 38'. La décantation lors de l'étape 4'' est effectuée à l'aide de tout système décanteur performant équipé par exemple de modules lamellaires. Les boues sont évacuées en 40 à la base du décanteur 30 et elles peuvent être ensuite traitées en même temps que les sables extraits dans le réacteur 22.

Le procédé selon l'invention peut s'appliquer de façon tout à fait appropriée à l'appareil de traitement des eaux par précipitation, séparation, épaississement des boues, comportant un décanteur lamellaire à recirculation des boues, du type décrit dans le brevet français n° 83.15 977 au nom de la présente titulaire, publié sous le n° 2 553 082 auquel il conviendra de se reporter.

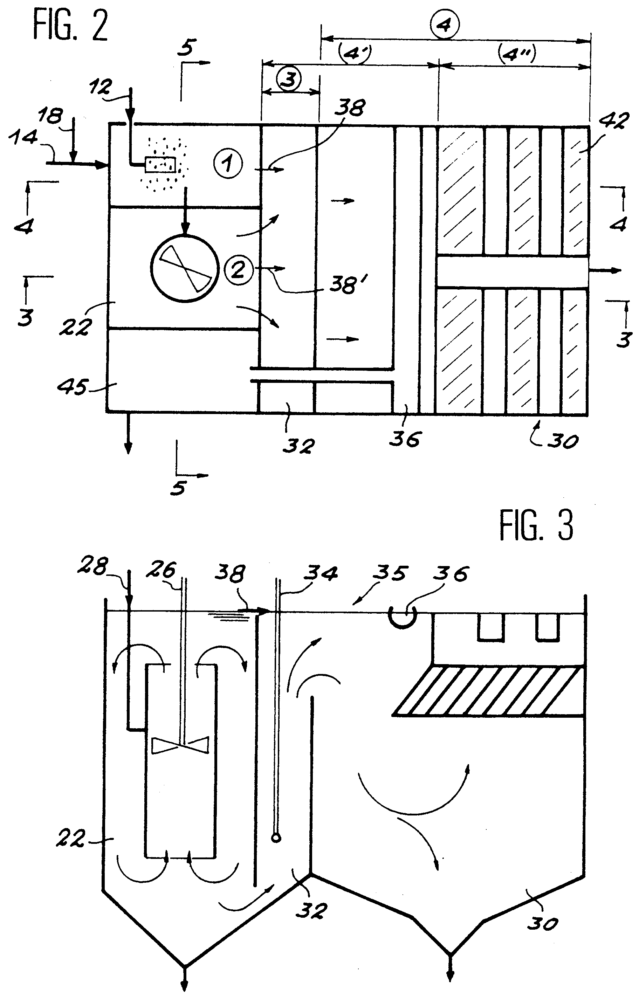

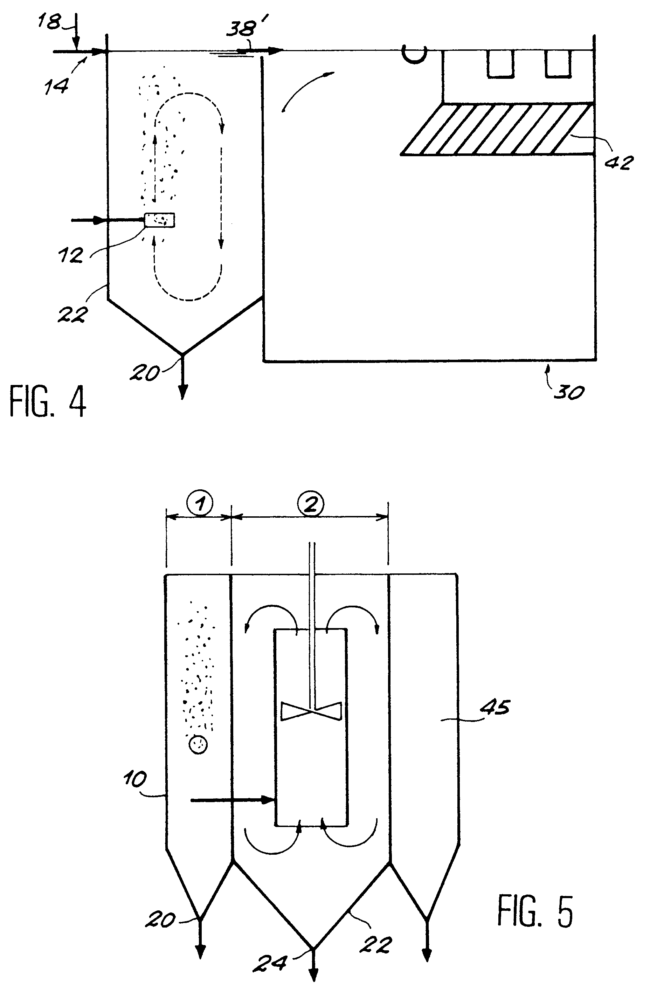

Une installation mettant en oeuvre un tel décanteur est illustrée par les figures 2 à 5. On y retrouve les différentes étapes décrites ci-dessus en regard de la figure 1, ainsi que les références utilisées sur cette figure :
- étape 1 (coagulateur)
   - temps de séjour : 3 minutes
   - vitesse apparente : 70 m3/h/m2 (diamètre du sable retenu supérieur à 200 um) - énergie (air) : 40 W/m3
- étape 2 (floculation rapide)
   - hélice gainée : 10 à 20 W/m3
   - vitesse apparente : 30 m3/h/m2 (diamètre du sable retenu supérieur ou égal à 100 um)
- étape 3 (floculation lente)
   Cette étape s'effectue comme précédemment dans un réacteur piston 32 à flux ascentionnel et à faible énergie.
- étape 4 (comme décrit ci-dessus, cette étape comporte l'alimentation 35 du décanteur 30 et la phase décantation 4'' proprement dite) :
   - dans la zone 4', on travaille à flux descendant avec une surface de séparation constituée comme précédemment par les surfaces du réacteur piston 32 et de la zone d'alimentation 35. La vitesse apparente est de l'ordre de 15 m/h.
   - dans l'étape de décantation 4'', on met en oeuvre des décanteurs lamellaires 42 comme décrit dans le brevet mentionné ci-dessus :
   - vitesse dans les modules lamellaires 20 à 25 m/h
   - rendement de l'élimination des matières en suspension : 80 à 95%.

On remarquera que ce dispositif conforme à l'invention permet d'intégrer toutes les fonctions dans son dimensionnement et dans sa configuration initiale. La configuration du dispositif permet le transfert direct des graisses des zones correspondant aux étapes 1 et 2 vers la zone de l'étape 3 où est placé le récupérateur des flottants. On notera que ce dispositif permet d'intégrer une enceinte 45 permettant le stockage des graisses.

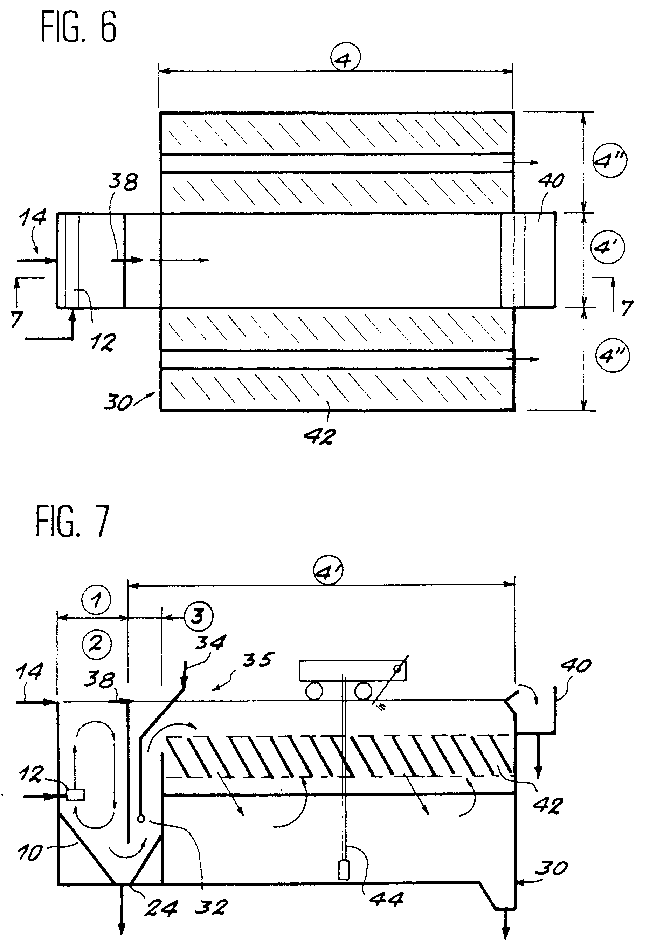

La présente invention peut également s'appliquer, au moins partiellement, en mettant en oeuvre un décanteur primaire lamellaire comme représenté sur les figures 6 et 7. Dans ce mode de réalisation, il n'y a pas de floculation intégrée au décanteur (étapes 1-2 et 3) et seule l'étape de séparation du dégraissage peut être superposée à l'étape d'alimentation du décanteur. Dans le cas de l'utilisation d'un décanteur lamellaire, la répartition hydraulique du décanteur peut avantageusement être du type aval, c'est-à-dire à cloisonnement par le dessus, comme décrit dans le brevet français n° 86.06638 déposé par la présente titulaire et publié sous le numéro 2.598 331. Grâce à ce dispositif, on peut dégager une zone d'alimentation ouverte sans système de répartition par goulotte.

Sur les figures 6 et 7, on retrouve les diverses étapes selon la présente invention ainsi que les réacteurs décrits ci-dessus permettant leur mise en oeuvre, notamment le réacteur de dessablage 10 avec la zone de coalescence 2 et le réacteur piston 32 précédant la zone d'alimentation 35 du décanteur à flux ascendant.

Dans cette variante, le dispositif 44 assurant le raclage du fond du décanteur lamellaire 30 sert également à pousser les flottants vers la sortie 40.

Il demeure bien entendu que la présente invention n'est pas limitée aux exemples de mise en oeuvre ou de réalisation décrit ici mais qu'elle en englobe toutes les variantes. C'est ainsi que notamment l'invention englobe également le procédé dans lequel on n'effectue non pas les deux fonctions dessablage et dégraissage mais une seule d'entre elles.

La présente invention englobe également le cas où on utilise un filtre en lieu et place d'un décanteur.

## Revendications

1. Procédé de traitement des eaux qui consiste à effectuer dans un même ouvrage les opérations de dessablage, de dégraissage, de coagulation, de floculation et de décantation caractérisé en ce qu'il consiste
d'une part,
- à décomposer le dessablage en une phase de désenrobage des sables et une phase de séparation et d'élimination des sables fins présentant une granulométrie inférieure à 250 µm ;
- à décomposer le dégraissage en une première phase de coalescence des graisses par action mécanique avec ou sans injection d'air, une seconde phase de coalescence des graisses par injection d'air et une phase de séparation des graisses ;
et d'autre part, à effectuer l'une au moins des étapes suivantes :
- une étape réalisant simultanément la phase de désenrobage des sables et celle de coagulation de l'eau brute ;
- une étape réalisant simultanément la phase de séparation et d'élimination des sables fins, la première phase de coalescence des graisses et une phase de floculation par action mécanique ;
- une étape réalisant simultanément la deuxième phase de coalescence des graisses et la phase de floculation durant laquelle s'effectue la croissance des flocs et,
une étape réalisant simultanément la phase de séparation des graisses et l'alimentation de la décantation.

2. Dispositif pour la mise en oeuvre du procédé selon la revendication 1 caractérisé en ce qu'il comporte dans le même ouvrage et successivement :
- un premier réacteur (10) de désenrobage des sables et de coagulation de l'eau brute comportant des moyens (12) d'agitation mécanique ou d'insuflation d'air et des moyens d'évacuation du sable à sa partie inférieure;
- un second réacteur (22) de séparation et d'élimination des sables fins de granulométrie inférieure à 250 µm, de coalescence des graisses et de floculation par action mécanique qui comprend des moyens d'agitation (26) mécaniques avec ou sans injection de bulles d'air, des moyens d'introduction (28) d'un agent floculant et des moyens d'évacuation des sables fins en partie inférieure ;
- un troisième réacteur (32) de croissance du floc et de début de séparation des graisses qui comprend des moyens (34) pour injecter des bulles d'air;
- une zone d'alimentation (35) d'un décanteur (30) muni d'un système de reprise ou de transfert (38) des flottants et des moyens (40), à la base du décanteur (30), pour assurer l'évacuation des boues décantées.

3. Dispositif selon la revendication 2 caractérisé en ce que le troisième réacteur (32) est un réacteur piston à flux ascentionnel.

4. Dispositif selon l'une des revendications 2 ou 3 caractérisé en ce que le décanteur (30) est un décanteur lamellaire.

5. Dispositif selon la revendication 4 caractérisé en ce que ledit décanteur lamellaire est un décanteur à répartition hydraulique du type aval, à cloisonnement par le dessus.

6. Dispositif selon la revendication 1 caractérisé en ce que le décanteur (30) est remplacé par un filtre.

## Claims

1. Method of treating waters, which consists of performing, in a single piece of work, the operations of desanding, degreasing, coagulation, flocculation and settling, characterized in that it consists
on the one hand,
- of breaking down the desanding into a phase of coating removal from the sands and a phase of separation and removal of the fine sands having a granulometry less than 250 µm;
- of breaking down the degreasing into a first phase of coalescence of the greases by mechanical action with or without injection of air, a second phase of coalescence of the greases by injection of air and a separation phase for the greases;
and, on the other hand, of carrying out at least one of the following steps:
- a step realising, simultaneously, the phase of coating removal from the sands and that of coagulation of the raw water;
- a step realising, simultaneously, the phase of separation and removal of the fine sands, the first phase of coalescence of the greases and a flocculation phase by mechanical action;
- a step realising, simultaneously, the second phase of coalescence of the greases and the flocculation phase, during which the growth of the flocculates takes place and,
- a step realising, simultaneously, the phase of separation of the greases and the feed to the settling stage.

2. Device for carrying out the method according to claim 1, characterized in that it comprises, in the same construction and successively:
- a first reactor (10) for removal of coatings from the sands and coagulation of the raw water, comprising means (12) for mechanical stirring or air injection and means for removing the sand at its lower part;
- a second reactor (22) for separation and removal of the fine sands having a granulometry smaller than 250 µm, for coalescence of the greases and for flocculation by mechanical action, which comprises mechanical stirring means (26) with or without injection of air bubbles, means for introduction (28) of a flocculating agent and means for removal of the fine sands from the lower part;
- a third reactor (32) for growth of the flocculate and commencement of separation of the greases, which comprises means (34) for injecting air bubbles;
- a feed zone (35) to a settling stage (30), provided with a system for recovering or transferring (38) the floating substances and means (40), at the base of the settling stage (30), for assuring the removal of the settled sludge.

3. Device according to claim 2, characterized in that the third reactor (32) is an ascending plug flow reactor.

4. Device according to one of claims 2 or 3, characterized in that the settling tank (30) is a lamellar settling tank.

5. Device according to claim 4, characterized in that said lamellar settling tank is a settling tank with hydraulic distribution of the downstream type, partitioned above.

6. Device according to claim 1, characterized in that the settling tank (30) is replaced by a filter.

## Patentansprüche

1. Verfahren zur Behandlung von Wasser, bei dem in derselben Anlage die Operationen des Entsandens, des Entfettens, des Koagulierens, des Ausflockens und des Dekantierens ausgeführt werden,
dadurch **gekennzeichnet**,
daß es einerseits darin besteht,
- das Entsanden in eine Phase der Entmantelung von Sänden und in eine Phase der Trennung und Eliminierung von feinen Sänden, die einen Korndurchmesser von weniger als 250 µm aufweisen, aufzugliedern;
- das Entfetten in eine erste Phase der Koaleszenz von Fetten durch mechanische Einwirkung mit oder ohne Luftinjektion, eine zweite Phase der Koaleszenz von Fetten durch Luftinjektion und eine Phase der Abscheidung von Fetten aufzugliedern;
und daß es andererseits darin besteht, mindestens einen der folgenden Schritte auszuführen:
- ein Schritt, bei dem gleichzeitig die Phase der Entmantelung von Sänden und die des Koagulierens von unbehandeltem Wasser durchgeführt wird;
- ein Schritt, bei dem gleichzeitig die Phase des Abscheidens und Eliminierens von feinen Sänden, die erste Phase der Koaleszenz von Fetten und eine Phase des Ausflockens durch mechanische Einwirkung durchgeführt wird;
- ein Schritt, bei dem gleichzeitig die zweite Phase der Koaleszenz von Fetten und die Phase des Ausflockens durchgeführt wird, während derer das Wachstum der Flocken stattfindet, und
- ein Schritt, bei dem gleichzeitig die Phase des Abscheidens von Fetten und die Zufuhr zum Dekantieren durchgeführt wird.

2. Vorrichtung zur Durchführund des Verfahrens gemäß Anspruch 1,
dadurch **gekennzeichnet**,
daß sie in derselben Anlage aufeinanderfolgend aufweist:
- einen ersten Reaktor (10) zum Entmanteln von Sänden und zum Koagulieren von unbehandeltem Wasser, der Mittel (12) zum mechanischen Rühren oder zum Einblasen von Luft und Mittel zum Evakuieren von Sand in seinem unteren Bereich aufweist;
- einen zweiten Reaktor (22) zum Abscheiden und Eliminieren von feinen Sänden mit einem Korndurchmesser von weniger als 250 µm, zur Koaleszenz von Fetten und zum Ausflocken durch mechanische Einwirkung, der mechanische Mittel zum Rühren (26) mit oder ohne Injektion von Luftblasen, Mittel (28) zum Einbringen eines Flockungsmittels und Mittel zum Evakuieren von feinen Sänden im unteren Bereich aufweist;
- einen dritten Reaktor (32) für das Wachstum der Flocken und den Beginn der Abscheidung von Fetten, der Mittel (34) zum Injizieren von Luftblasen aufweist;
- einen Zuflußbereich (35) eines Dekantierers (30), der mit einem System zur Wiederaufnahme oder zum Transport (38) des Schwimmguts und mit Mitteln (40) auf dem Grund des Dekantierers (30) zur Evakuierung der dekantierten Schlämme versehen ist.

3. Vorrichtung gemaß Anspruch 2,
dadurch **gekennzeichnet**,
daß der dritte Reaktor (32) ein Reaktor mit aufsteigendem Kolbenfluß ist.

4. Vorrichtung gemäß Anspruch 2 oder 3,
dadurch **gekennzeichnet**,
daß der Dekantierer (30) ein lamellierter Dekantierer ist.

5. Vorrichtung gemäß Anspruch 4,
dadurch **gekennzeichnet**,
daß der lamellierte Dekantierer ein von oben geschlossener Dekantierer mit hydraulischer Unterteilung der niederdruckseitigen Art ist.

6. Vorrichtung gemäß Anspruch 1,
dadurch **gekennzeichnet**,
daß der Dekantierer (30) durch einen Filter ersetzt wird.
